(19) Europäisches Patentamt
European Patent Office
Office européen des brevets

(11) EP 2 204 414 A1

(12) **EUROPEAN PATENT APPLICATION**
published in accordance with Art. 153(4) EPC

(43) Date of publication:
**07.07.2010 Bulletin 2010/27**

(21) Application number: **08841033.7**

(22) Date of filing: **23.10.2008**

(51) Int Cl.:
***C08L 51/00*** *(2006.01)* ***C08K 5/3417*** *(2006.01)*
***G02B 5/20*** *(2006.01)*

(86) International application number:
**PCT/JP2008/069195**

(87) International publication number:
**WO 2009/054437 (30.04.2009 Gazette 2009/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.10.2007 JP 2007279128**

(71) Applicant: **Kao Corporation**
**Chuo-Ku**
**Tokyo 103-8210 (JP)**

(72) Inventors:
- **KUWAHARA, Kazuo**
**Wakayama-shi**
**Wakayama 640-8580 (JP)**
- **ITOI, Akito**
**Wakayama-shi**
**Wakayama 640-8580 (JP)**
- **ISHIKAWA, Kazuhiro**
**Wakayama-shi**
**Wakayama 640-8580 (JP)**
- **ZUSHI, Hirokazu**
**Wakayama-shi**
**Wakayama 640-8580 (JP)**

(74) Representative: **HOFFMANN EITLE**
**Patent- und Rechtsanwälte**
**Arabellastrasse 4**
**81925 München (DE)**

# (54) NON-AQUEOUS PIGMENT DISPERSION COMPOSITION

(57) The present invention relates to [1] a non-aqueous pigment dispersion composition including (A) a pigment, (B) a non-aqueous solvent and (C) a polymer obtained by reacting a copolymer (component (c1)) containing a constitutional unit derived from (c1a) a vinyl monomer containing a reactive functional group and a constitutional unit derived from (c1b) a vinyl monomer containing a nitrogen atom with a poly(alkyl (meth)acrylate) and/or a polystyrene (component (c2)) containing a functional group capable of reacting with the reactive functional group in the component (c1) at one terminal end thereof; and [2] a process for producing a polymer for non-aqueous pigment dispersion, including the steps of (I) reacting the vinyl monomer (c1b) with the vinyl monomer (c1a) to produce a copolymer containing constitutional units derived from the respective vinyl monomers; and (II) reacting the resulting copolymer with the component (c2) to produce a graft copolymer formed by grafting the component (c2) to the copolymer.

EP 2 204 414 A1

## Description

FIELD OF THE INVENTION

The present invention relates to non-aqueous pigment dispersion compositions and a process for producing polymers for non-aqueous pigment dispersion.

BACKGROUND OF THE INVENTION

It is conventionally known that a polymer material is useful to disperse a solid pigment in an organic solvent. The polymer material has been used to prepare a pigment dispersion for formulating solvent-based paint compositions. Such a material as a dispersant has been employed in extensive applications, mainly in the applications such as solvent-based paints for exterior parts of automobiles and inks for color filters used in liquid crystal displays. In particular, in the field of the color filters, owing to a recent demand for a high quality of liquid crystal displays such as high chroma and high brightness, it has also been required that pigments used in the color filters are finely divided and contained therein at a high concentration. As such a polymer serving as the dispersant, it is known that graft polymers exhibit a good performance.

For example, JP 7-140654A discloses a radiation-sensitive composition composed of (A) a binder polymer in the form of a copolymer of (A-1) a monomer containing an alcoholic hydroxyl group, (A-2) a macromonomer and (A-3) the other monomer capable of copolymerizing with these monomers, (B) a pigment and (C) a radiation-sensitive compound.

JP 10-339949A discloses a pigment dispersion composition which is formed by dispersing an organic pigment and a copolymer of a polymerizable oligomer containing an ethylenically unsaturated double bond at a terminal end thereof and a monomer containing a nitrogen atom-containing group and an ethylenically unsaturated double bond, in an organic solvent.

In addition, JP 2003-517063A discloses a polymer composition suitable as a dispersant for pigments which is composed of a graft copolymer whose main chain is grafted with a macromonomer and contains an amide functional group as a pigment-fixing group.

SUMMARY OF THE INVENTION

The present invention relates to [1] a non-aqueous pigment dispersion composition including (A) a pigment, (B) a non-aqueous solvent and (C) a polymer obtained by reacting the following components (c1) and (c2) with each other, and [2] a process for producing a polymer for non-aqueous pigment dispersion,

Component (c1): a copolymer containing a constitutional unit derived from (c1a) a vinyl monomer containing a reactive functional group and a constitutional unit derived from (c1b) a vinyl monomer containing a nitrogen atom; and

Component (c2): a poly(alkyl (meth)acrylate) and/or a polystyrene containing a functional group capable of reacting with the reactive functional group in the component (c1) at one terminal end thereof.

DETAILED DESCRIPTION OF THE INVENTION

The conventional compositions described in the above three Patent Documents have such a problem that the polymer used therein as a dispersant which is not fixed on a surface of the pigment owing to a low adsorptivity of the polymer to the pigment tends to cause deterioration in resin properties after exposure to light.

Thus, the present invention relates to the following aspects [1] and [2].

> [1] A non-aqueous pigment dispersion composition including (A) a pigment, (B) a non-aqueous solvent and (C) a polymer obtained by reacting the following components (c1) and (c2) with each other,
> Component (c1): a copolymer containing a constitutional unit derived from (c1a) a vinyl monomer containing a reactive functional group and a constitutional unit derived from (c1b) a vinyl monomer containing a nitrogen atom; and
> Component (c2): a poly(alkyl (meth)acrylate) and/or a polystyrene containing a functional group capable of reacting with the reactive functional group in the component (c1) at one terminal end thereof.
> [2] A process for producing a polymer for non-aqueous pigment dispersion, including the following steps (I) and (II):
>
> > Step (I): reacting (c1b) a vinyl monomer containing a nitrogen atom with (c1a) a vinyl monomer containing a reactive functional group to produce a copolymer containing a constitutional unit derived from the vinyl monomer (c1a) and a constitutional unit derived from the vinyl monomer (c1b); and
> > Step (II): reacting the copolymer produced in the above step (I) with (c2) a poly(alkyl (meth)acrylate) and/or a

polystyrene (component (c2)) containing a functional group capable of reacting with the reactive functional group in the copolymer at one terminal end thereof to produce a graft copolymer formed by grafting the component (c2) to the copolymer.

The non-aqueous pigment dispersion composition according to the present invention includes the pigment (A), the non-aqueous solvent (B) and the polymer (C). The respective components are explained below.

[Pigment (A)]

The pigment (A) used in the present invention may be either an organic pigment or an inorganic pigment. The organic or inorganic pigment may be used in combination with an extender pigment, if required.
Examples of the inorganic pigment include carbon blacks, metal oxides, metal sulfides and metal chlorides.
Examples of the organic pigment include azo pigments, phthalocyanine pigments, condensed polycyclic pigments and lake pigments. Specific examples of the azo pigments include insoluble azo pigments such as C.I. Pigment Red 3, soluble azo pigments such as C.I. Pigment Red 48:1, and condensed azo pigments such as C.I. Pigment Red 144. Specific examples of the phthalocyanine pigments include copper phthalocyanine pigments such as C.I. Pigment Blue 15:6.
Specific examples of the condensed polycyclic pigments include anthraquinone pigments such as C.I. Pigment Red 177, perylene pigments such as C.I. Pigment Red 123, perinone pigments such as C.I. Pigment Orange 43, quinacridone pigments such as C.I. Pigment Red 122, dioxazine pigments such as C.I. Pigment Violet 23, isoindolinone pigments such as C.I. Pigment Yellow 109, isoindoline pigments such as C.I. Pigment Orange 66, quinophthalone pigments such as C.I. Pigment Yellow 138, indigo pigments such as C.I. Pigment Red 88, metal complex pigments such as C.I. Pigment Green 8, and diketopyrrolopyrrole pigments such as C.I. Pigment Red 254, C.I. Pigment Red 255 and C.I. Pigment Orange 71.
Among these pigments, from the viewpoint of exhibiting the effects of the present invention in a more efficient manner, preferred are diketopyrrolopyrrole pigments represented by the following general formula (1).
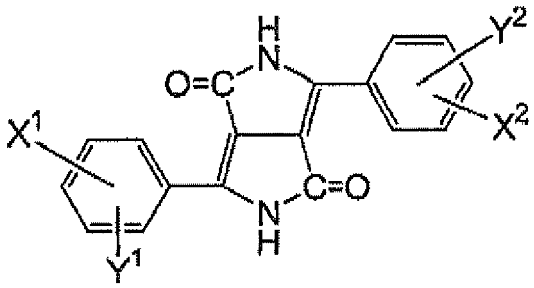

(1)

In the general formula (1), $X^1$ and $X^2$ are each independently a hydrogen atom or a halogen atom such as a fluorine atom and a chlorine atom; and $Y^1$ and $Y^2$ are each independently a hydrogen atom or a $-SO_3H$ group.
From the viewpoint of a high brightness Y value, the pigment (A) is desirably in the form of finely divided particles preferably having an average primary particle size of 100 nm or less and more preferably from 20 to 60 nm. The average primary particle size of the pigment may be determined by the method in which the sizes of primary particles of the pigment are directly measured from an electron micrograph thereof. More specifically, short axis diameters and long axis diameters of the individual primary particles are measured to obtain an average value thereof as a particle size of the particles. The volumes of 100 or more particles are respectively approximated to that of a cubic body having a side length equal to the thus obtained particle size to determine a volume-average particle size as the average primary particle size.
Examples of suitable commercially available products of the diketopyrrolopyrrole pigments include C.I. Pigment Red 254 (compound of the above general formula (1) wherein $X^1$ and $X^2$ are respectively a chlorine atom; and $Y^1$ and $Y^2$ are respectively a hydrogen atom), the tradenames of "Irgaphor Red B-CF", "Irgaphor Red BK-CF", "Irgaphor Red BT-CF", "Irgazin DPP Red BO", "Irgazin DPP Red BL", "Cromophtal DPP Red BP" and "Cromophtal DPP Red BOC", etc. available from Ciba Specialty Chemicals Corp.
The above pigments (A), in particular, the diketopyrrolopyrrole pigments, may be used alone or in combination of any two or more thereof.

[Non-Aqueous Solvent (B)]

The non-aqueous solvent (B) used in the present invention is not particularly limited. In particular, when the obtained composition is applied to oily inks for color filters, a high-boiling organic solvent having a boiling point of 100˚C or higher is preferably used as the non-aqueous solvent (B). Examples of the high-boiling organic solvent include the following compounds (i) to (v).

(i) Ethylene glycol alkyl ethers (cellosolves): such as ethylene glycol monomethyl ether, ethylene glycol diethyl ether and ethylene glycol monoethyl ether.
(ii) Diethylene glycol alkyl ethers (carbitols): such as diethylene glycol monomethyl ether, diethylene glycol dimethyl ether and diethylene glycol monoethyl ether.
(iii) Alcohols: such as ethylene glycol, diethylene glycol and glycerol.
(iv) Alkanediyl glycol dialkyl ethers: such as propylene glycol monomethyl ether and propylene glycol dimethyl ether.
(v) Alkanediyl glycol monoalkyl ether acetates: such as ethylene glycol monomethyl ether acetate, ethylene glycol monoethyl ether acetate, ethylene glycol monoethyl ether propionate, ethylene glycol monomethyl ether propionate, propylene glycol monomethyl ether acetate, propylene glycol monoethyl ether acetate, Propylene glycol monomethyl ether propionate, propylene glycol monoethyl ether propionate, diethylene glycol monomethyl ether acetate and diethylene glycol monobutyl ether acetate.

Among these non-aqueous solvents (B), from the viewpoints of a good dissolvability or dispersibility of the polymer (C) therein and a good dispersibility of the pigment (A) therein, preferred are the alkanediyl glycol monoalkyl ether acetates (v), and more preferred are propylene glycol monomethyl ether acetate (PGMEA; boiling point; 146˚C) and diethylene glycol monobutyl ether acetate (BCA; boiling point: 247˚C).
These non-aqueous solvents (B) may be used alone or in combination of any two or more thereof.

[Polymer (C)]

In the polymer (C) used in the present invention, the specific copolymer as the component (c1) constitutes a main chain of the polymer (C), and serves as a moiety adsorbed to the pigment (A) when dispersing the pigment (A) in the non-aqueous solvent (B). Whereas, the specific poly(alkyl (meth)acrylate) and/or polystyrene as the component (c2) constitutes a side chain grafted to the main chain of the polymer (C), and serves for enhancing mainly a heat resistance of the resulting polymer.
The polymer (C) may be produced by subjecting a reactive functional group of the component (c1) to coupling reaction with the component (c2). More specifically, the polymer (C) is preferably produced by a process including the following steps (I) and (II) (polymer reaction method).

Step (I): reacting (c1b) a vinyl monomer containing a nitrogen atom with (c1a) a vinyl monomer containing a reactive functional group to produce a copolymer containing a constitutional unit derived from the vinyl monomer (c1a) and a constitutional unit derived from the vinyl monomer (c1b); and
Step (II): reacting the copolymer produced in the above step (I) with (c2) a poly(alkyl (meth)acrylate) and/or a polystyrene (component (c2)) containing a functional group capable of reacting with the reactive functional group in the copolymer at one terminal end thereof to produce a graft copolymer formed by grafting the component (c2) to the copolymer.

[Component (c1)]

The component (c1) is in the form of a copolymer containing a constitutional unit derived from the vinyl monomer (c1a) containing a reactive functional group and a constitutional unit derived from the vinyl monomer (c1b) containing a nitrogen atom. As described above, the component (c1) may be obtained by copolymerizing a monomer mixture composed of the vinyl monomer (c1a) containing a reactive functional group and the vinyl monomer (c1b) containing a nitrogen atom. Owing to the above construction of the component (c1), the polymer (C) can be subjected to modification, etc., by using the residual reactive functional groups therein while keeping its good adsorption to the pigment.

[Vinyl Monomer (c1a) Containing Reactive Functional Group]

Examples of the vinyl monomer containing a reactive functional group include those vinyl monomers containing an epoxy group, an isocyanate group, a carboxyl group, a phosphoric group, a sulfonic group or an amino group.
Specific examples of the vinyl monomer containing an epoxy group include (meth)acrylic acid esters such as glycidyl

(meth)acrylate, 4-hydroxybutyl (meth)acrylate glycidyl ether and 3,4-epoxycyclohexylmethyl (meth)acrylate; (meth)acrylamides such as N-glycidyl (meth)acrylamide; ally ethers such as allyl glycidyl ether; and 1,2-epoxy-5-hexene.
Meanwhile, the term "(meth)acrylic" as used in the present specification means acrylic, methacrylic and both thereof, and the term "(meth)acrylate" as used herein means an acrylate, a methacrylate and both thereof.
Specific examples of the vinyl monomer containing an isocyanate group include those isocyanate monomers available from Showa Denko KK, such as 2-methacryloyloxyethyl isocyanate (product name: " Karenz MOI"), 2-[(3,5-dimethylpyrazolyl)carboxyamino]ethyl methacrylate (product name: " Karenz MOI-BP"), 2-([1'-methylpropylideneamino]carboxyamino)ethyl methacrylate (product name: " Karenz MOI-BM") and 2-acryloyloxyethyl isocyanate (product name: "Karenz AOI').

Specific examples of the vinyl monomer containing a carboxyl group include (meth)acrylic acid, 2-(meth)acryloyloxyethyl succinic acid and 2-(meth)acryloyloxyethyl phthalic acid.
Specific examples of the vinyl monomer containing a phosphoric group include mono(2-methacryloyloxyethyl) acid phosphate and mono(2-acryloyloxyethyl) acid phosphate.
Specific examples of the vinyl monomer containing a sulfonic group include acrylamide 2-methyl propane sulfonic acid.
Specific examples of the vinyl monomer containing an amino group include dimethylaminoethyl (meth)actylate, diethylaminoethyl (meth)acrylate, 2-vinyl pyridine and 4-vinyl pyridine.
Among these vinyl monomers, from the viewpoints of a good reactivity and a high polymerization rate, preferred are vinyl monomers containing an epoxy group, more preferred are (meth)acrylic acid esters containing a glycidyl group, and still more preferred is glycidyl (meth)acrylate.

[Vinyl Monomer (c1b) Containing Nitrogen Atom]

The vinyl monomer containing a nitrogen atom is preferably an amide bond-containing vinyl monomer. More specifically, as the amide bond-containing vinyl monomer, there may be mentioned (meth)acrylamides, vinyl pyrrolidones, vinyl pyridines, nitrogen-containing styrene-based monomers and nitrogen-containing (meth)acrylic acid esters.
Specific examples of the (meth)acrylamides include (meth)acrylamide, N,N-dialkyl (meth)acrylamides (in which the number of carbon atoms in the alkyl group is preferably from 1 to 8 and more preferably from 1 to 4), N-alkyl (meth) acrylamides (in which the number of carbon atoms in the alkyl group is preferably from 1 to 8 and more preferably from 1 to 4), N,N-dialkyl aminoalkyl (meth)acrylamides (in which the number of carbon atoms in the alkyl group of "N,N-dialkyl" is preferably from 1 to 8 and more preferably from 1 to 4, and the number of carbon atoms in the alkyl group of "aminoalkyl" is preferably from 1 to 6), (meth)acrylamide 2-methylpropyl sulfonic acid, morpholino(meth)acrylamide, piperidino(meth) acrylamide, N-methyl-2-pyrrolidyl (meth)acrylamide and N,N-methylphenyl (meth)acrylamide.
Specific examples of the vinyl pyrrolidones include N-vinyl-2-pyrrolidone,

Specific examples of the vinyl pyridines include 2-vinyl pyridine and 4-vinyl pyridine. Specific examples of the nitrogen-containing styrene-based monomers include p-styrene sulfonamide, p-aminostyrene and aminomethyl styrene.
Specific examples of the nitrogen-containing (meth)acrylic acid esters include N,N-dialkyl aminoalkyl (meth)acrylates (in which the number of carbon atoms in the alkyl group of "N,N-dialkyl" is preferably from 1 to 8 and more preferably from 1 to 4, and the number of carbon atoms in the alkyl group of "aminoalkyl" is preferably from 1 to 6), 1-(N,N-dialkylamino)-1,1-dimethylmethyl (meth)acrylates (in which the number of carbon atoms in the alkyl group is preferably from 1 to 8 and more preferably from 1 to 4), morpholinoethyl (meth)acrylate, piperidinoethyl (meth)acrylate, 1-pyrrolidinoethyl (meth)acrylate, N,N,dimethyl-2-pyrrolidylaminoethyl (meth)acrylate and N,N-methylphenylaminoethyl (meth) acrylate.
Among these vinyl monomers containing a nitrogen atom, from the viewpoint of a good adsorption to the pigment, preferred are (meth)acrylamides and vinyl pyrrolidones, and more preferred is N-vinyl pyrrolidone.

[Other Monomer (c1c)]

The component (c1) which is in the form of a copolymer containing a constitutional unit derived from the monomer (c1a) and a constitutional unit derived from the vinyl monomer (c1b) containing a nitrogen atom may be further copolymerized with the other monomer (c1c) capable of copolymerizing with the above monomers unless the further copolymerization with the other monomer (c1c) adversely affects the aimed effects of the present invention.
Examples of the other monomer (c1c) include (meth)acrylic acid esters such as methyl (meth)acrylate, ethyl (meth) acrylate, stearyl (meth)acrylate, benzyl (meth)acrylate, isobornyl (meth)acrylate, 2-hydroxyethyl (moth)acrylate, glycerol mono(meth)acrylate, perfluorooctylethyl (meth)acrylate and methoxy polyethylene glycol (meth)acrylate; styrenes such as styrene; vinyl esters such as vinyl acetate; and vinyl ethers such as butyl vinyl ether. Among these monomers, preferred are those monomers containing an alcoholic hydroxyl group such as, in particular, 2-hydroxyethyl (meth) acrylate.
The monomers (c1a), (c1b) and (c1c) may be respectively used alone or in combination of any two or more thereof.

The content of each of the constitutional units derived from the monomers (c1a), (c1b) and (c1c) in the component (c1) is not particularly limited. The content of the constitutional unit derived from the monomer (c1a) is usually from 5 to 95% by weight and preferably from 10 to 90% by weight. The content of the constitutional unit derived from the monomer (c1b) is usually from 5 to 95% by weight and preferably from 10 to 90% by weight. The content of the constitutional unit derived from the monomer (c1c) is usually from 0 to 80% by weight and preferably from 5 to 75% by weight.

[Production of Component (c1)]

The component (c1) is preferably produced by the process including the step (I) in which the vinyl monomer (c1b) containing a nitrogen atom and the vinyl monomer (c1a) containing a reactive functional group are reacted, if required, together with the other monomer (c1c) to produce a copolymer containing a constitutional unit derived from the monomer (c1a) and a constitutional unit derived from the monomer (c1b), and further a constitutional unit derived from the monomer (c1c), if required.

In the step (I), all of the above components may be added at one time and reacted with each other. However, it is preferred that the whole step (I) be divided into several stages, and divided parts of the respective components be added to the respective stages to react them at each stage.

The polymerization method used in the above reaction is not particularly limited, and there may be adopted bulk polymerization, solution polymerization, suspension polymerization and the like. Among these polymerization methods, preferred is the solution polymerization. Examples of a solvent usable in the solution polymerization include alcohols such as methanol, ethanol and isopropanol; ketones such as acetone and methyl ethyl ketone; esters such as ethyl acetate and butyl acetate; hydrocarbons such as hexane and cyclohexane; ethers such as diethyl ether and tetrahydrofuran; aromatic compounds such as benzene and toluene; and halogenated hydrocarbons such as dichloromethane and chloroform.

As the polymerization initiator usable in the above reaction, there may be mentioned azo-based initiators such as 2,2'-azobisisobutyronitrile and 2,2'-azobis(2,4-dimethylvaleronitrile), peroxide-based initiators such as lauroyl peroxide and benzoyl peroxide; and persulfate-based initiators such as ammonium persulfate. In the above reaction, a chain transfer agent may be used, of desired. Examples of the chain transfer agent include mercaptans such as dodecyl mercaptan, mercaptoethanol and mercaptopropionic acid.

The temperature used in the above polymerization reaction may be appropriately determined depending upon the kinds of polymerization initiator and solvent to be used therein, etc., and is usually in the range of from 50 to 100°C.

The number-average molecular weight of the component (c1) is preferably from 500 to 50,000, more preferably from 1,000 to 30,000, still more preferably from 2,000 to 20,000 and further still more preferably from 2,000 to 10,000 in view of maintaining a good storage stability of the composition of the present invention as a dispersion and suppressing deterioration in dispersing rate of the pigment. Also, from the same viewpoints, the weight-average molecular weight of the component (c1) is preferably from 1,000 to 150,000, more preferably from 1,500 to 90,000, still more preferably from 2,000 to 60,000 and further still more preferably from 4,000 to 40,000.

The epoxy value of the component (c1) is preferably from 19 to 375 mg KOH/g, more preferably from 40 to 350 mg KOH/g and still more preferably from 50 to 300 mg KOH/g from the viewpoints of a good reactivity with the component (c2), etc. The number-average molecular weight and the epoxy value of the component (c1) may be adjusted as desired by controlling the conditions of copolymerization of the monomers (c1a) and (c1b), etc.

The vinyl monomers (c1a) and (c1b) and, if required, the vinyl monomer (c1c) as the raw materials may be added at one time and reacted with each other. However, in order to well control the composition, the respective raw materials may also be intermittently added as divided parts and reacted with each other at each addition time.

[Component (c2)]

The component (c2) is a poly(alkyl (meth)acrylate) and/or a polystyrene containing a functional group capable of reacting the reactive functional group of the component (c1) at one terminal end thereof.

Examples of the functional group capable of reacting the reactive functional group of the component (c1) include a carboxyl group, a hydroxyl group, an amino group, an epoxy group and an isocyanate group. The functional group capable of reacting the reactive functional group of the component (c1) may be appropriately selected from these groups in view of the kind of reactive functional group contained in the component (c1).

When the reactive functional group of the component (c1) is an epoxy group, as the component (c2), there are preferably used polymers containing a carboxyl group at one terminal end thereof (hereinafter occasionally referred to "one-end carboxylic acid-terminated type polymers") and polymers containing an amino group at one terminal end thereof (hereinafter occasionally referred to "one-end ammo-terminated type polymers").

When the reactive functional group of the component (c1) is an isocyanate group, as the component (c2), there are preferably used polymers containing a hydroxyl group at one terminal end thereof (hereinafter occasionally referred to

"one-end hydroxyl-terminated type polymers") and the polymers containing an amino group at one terminal end thereof (one-end amino-terminated type polymers).

Examples of the one-end carboxylic acid-terminated type polymers include one-end carboxylic acid-terminated type poly(alkyl (meth)acrylates) such as poly(methyl (meth)acrylate), poly(ethyl (meth)acrylate), poly(butyl (meth)acrylate) and poly(stearyl (meth)acrylate) which have a carboxyl group at one terminal end thereof; and one-end carboxylic acid-terminated type polystyrene.

Examples of the one-end amino-terminated type polymers include one-end amino-termmated type poly(alkyl (meth) acrylates) such as poly(methyl (meth)acrylate), poly(ethyl (meth)acrylate), poly(butyl (meth)acrylate) and poly(stearyl (meth)acrylate) which have an amino group at one terminal end thereof; and one-end amino-terminated type polystyrenes.

Examples of the one-end hydroxyl-terminated type polymers include one-end hydroxyl-terminated type poly(alkyl (moth) acrylates) such as poly(methyl (meth)acrylate), poly(ethyl (meth)acrylate), poly(butyl (meth)acrylate) and poly(stearyl (meth)acrylate) which have a hydroxyl group at one terminal end thereof; and one-end hydroxyl-terminated type polystyrenes.

As the component (c2), there may be used those polymers having a high solubility in a solvent used in the above reaction which are selected from the polymers exemplified above. For example, when using propylene glycol monomethyl ether acetate (PGMFA; boiling point: 146˚C) or diethylene glycol monobutyl ether acetate (BCA; boiling point: 247˚C) as the solvent, the one-end carboxylic acid-terminated poly(methyl (meth)acrylate), the one-end carboxylic acid-terminated polystyrenes, etc., are preferably used.

The component (c2) may be copolymerized with a small amount of the other functional group-containing monomer, if required. Examples of the other functional group-containing monomer include monomers constituting the component (c1), e.g., monomers (c1c) containing an alcoholic hydroxyl group such as 2-hydroxyethyl methacrylate, monomers (c1a) containing a carboxyl group such as methacrylic acid, and monomers (c1a) containing an epoxy group such as glycidyl methacrylate. The amount of the other functional group-containing monomer copolymerized with the component (c2) is not particularly limited unless it adversely affects the coupling reaction between the components (c1) and (c2), and is preferably from 0 to 10% by weight.

[Production of Component (c2)]

The method for producing the component (c2) is not particularly limited, and there may be adopted bulk polymerization, solution polymerization, suspension polymerization and the like. Among these polymerization methods, preferred is the solution polymerization. As a solvent, a polymerization initiator and a chain transfer agent usable in the solution polymerization, there may be mentioned those used for production of the component (c1). In order to introduce a carboxylic acid into one terminal end of the component (c2), the polymerization initiator containing a carboxylic acid such as 4,4'-azobis(4-cyano-butyric acid) or the chain transfer agent containing a carboxylic acid such as mercaptopropionic acid is preferably used. Also, in order to introduce an amino group into one terminal end of the component (c2), the chain transfer agent such as aminoethane thiol is preferably used. In order to introduce a hydroxyl group into one terminal end of the component (c2), the chain transfer agent such as Mercaptoethanol is preferably used.

The temperature used in the above polymerization reaction may be appropriately determined depending upon the kinds of polymerization initiator and solvent to be used therein, etc., and is usually in the range of from 50 to 100˚C.

The number-average molecular weight of the component (c2) is preferably from 500 to 20,000, more preferably from 500 to 10,000, still more preferably from 700 to 5,000 and further still more preferably from 700 to 2,000 in view of maintaining a good storage stability of the composition of the present invention as a dispersion and suppressing increase in viscosity thereof Also, from the same viewpoints, the weight-average molecular weight of the component (c2) is preferably from 1,000 to 50,000, more preferably from 1,000 to 20,000, still more preferably from 1,000 to 10,000 and further still more preferably from 1,000 to 5,000.

In addition, the molar ratio of the functional group of the component (c2) to the reactive functional group of the component (c1) [(functional group of component (c2))/(reactive functional group of component (c1))] is preferably from 0.05 to 1.0, more preferably from 0.1 to 0.9 and still more preferably from 0.2 to 0.8 from the viewpoint of suppressing increase in amount of the component (c2) that remains unreacted.

[Production of Polymer (C)]

The polymer (C) is produced by a coupling reaction between the reactive functional group of the component (c1) and the functional group of the component (c2) which is capable of reacting with the reactive functional group. More specifically, the polymer (C) is preferably produced by the step (II) in which the copolymer obtained in the step (I) is reacted with the poly(alkyl (meth)acrylate) and/or polystyrene (component (c2)) which contain the functional group capable of reacting with the reactive functional group of the copolymer at one terminal end thereof to produce a graft copolymer (polymer (C)) formed by grafting the component (c2) as a side chain to the copolymer (as a main chain),

The coupling reaction may be conducted in the presence of a catalyst. In particular, the reaction between an epoxy group and a carboxylic acid or between an isocyanate group and a hydroxyl group is preferably conducted in the presence of a catalyst. Examples of the catalyst used in the reaction between an epoxy group and a carboxylic acid include quaternary ammonium salts, tertiary amines, alkali metal hydroxides, inorganic acids, sulfonic acids, Carboxylic acids, solid acids and solid bases.
Specific examples of the quaternary ammonium salts include halides such as tetraethyl ammonium bromide, tetrabutyl ammonium bromide, tetrabutyl ammonium iodide, tetramethyl ammonium chloride, trimethylbenzyl ammonium chloride and triethylbenzyl ammonium chloride. Specific examples of the tertiary amines include triethylamine, dimethylbutylamine, diisopropylethylamine, and 2,2,6,6-tetramethyl piperidine.
Among the above catalysts, preferred are quaternary ammonium salts and tertiary amines, more preferred are quaternary ammonium halides, and still more preferred are tetrabutyl ammonium bromide and the like. The amount of the catalyst added is not particularly limited, and is preferably from 0.5 to 200 mol% on the basis of the carboxylic acid reacted.
As the catalyst used in the reaction between an isocyanate group and a hydroxyl group, there may be mentioned amines such as pyridine and organic metals such as dibutyl tin dilaurate. The amount of the catalyst added is not particularly limited, and is preferably from 0.05 to 200 mol% on the basis of the isocyanate group reacted.
The solvent used in the above reaction is not particularly limited as long as the components (c1) and (c2) can be dissolved therein. The solvents may be used alone or in combination of any two or more thereof.
The concentration in the reaction system is not particularly limited. The total amount of the components (c1) and (c2) is preferably from 5 to 70% by weight and more preferably from 10 to 50% by weight on the basis of a total amount of the whole components contained in the reaction system from the viewpoints of suppressing increase in viscosity thereof to thereby allow the reaction to proceed uniformly, and shortening the reaction time. The reaction temperature is not particularly limited, and is preferably 60˚C or higher from the viewpoint of a high reaction rate.
The progress of the coupling reaction may be confirmed by quantitative determination of the respective reactive functional groups. For example, when using the component (c1) containing an epoxy group and the component (c2) containing a carboxyl group, the progress of the coupling reaction may be confirmed by measuring an acid value and an epoxy value in the reaction system. Also, when using the component (c2) containing an amino group, the progress of the coupling reaction may be confirmed by measuring an amine value in the reaction system.
Meanwhile, the resulting copolymer (polymer (C)) may be heated together with a small amount of water added thereto to hydrolyze the unreacted reactive functional group (such as an epoxy group) remaining in the polymer obtained in the step (I) which constitutes a main chain of the copolymer.
The content of the constitutional unit derived from the component (c1a) in the polymer (C) obtained by the above method is preferably from 0 to 65% by weight, more preferably from 0 to 50% by weight and still more preferably from 0 to 45% by weight on the basis of a total weight of the whole constitutional units contained in the polymer (C) from the viewpoints of attaining a good adsorption to the pigment, suppressing increase in viscosity of the resulting composition and optimizing a particle size of the particles dispersed therein.
The content of the constitutional unit derived from the component (c1b) in the polymer (C) is preferably from 1 to 30% by weight, more preferably from 2 to 25% by weight and still more preferably from 5 to 20% by weight on the basis of a total weight of the whole constitutional units contained in the polymer (C) from the viewpoints of attaining a good adsorption to the pigment, suppressing increase in viscosity of the resulting composition and optimizing a particle size of the particles dispersed therein.
The content of the constitutional unit derived from the component (c2) in the polymer (C) is preferably from 30 to 95% by weight, more preferably from 40 to 90% by weight and still more preferably from 50 to 80% by weight on the basis of a total weight of the whole constitutional units contained in the polymer (C) from the viewpoints of attaining a good adsorption to the pigment and suppressing increase in viscosity of the resulting composition.
The weight-average molecular weight of the polymer (C) is preferably from 1,000 to 1,000,000, more preferably from 2,000 to 800,000 and still more preferably from 5,000 to 700,000 from the viewpoints of attaining a good adsorption to the pigment and suppressing increase in viscosity of the resulting composition.

[Pigment Dispersion Composition]

The pigment dispersion composition of the present invention contains the pigment (A), the non-aqueous solvent (B) and the polymer (C).
The content of the pigment (A) in the pigment dispersion composition is preferably from 1 to 30% by weight and more preferably from 2 to 20% by weight on the basis of the weight of the pigment dispersion composition from the viewpoints of a good coloration and a good viscosity of the resulting composition.
The content of the non-aqueous solvent (B) in the pigment dispersion composition is preferably from 100 to 10,000% by weight and more preferably from 200 to 1,000% by weight on the basis of a total weight of whole solid components in the pigment dispersion composition from the viewpoints of a good coloration and a good viscosity of the resulting

composition.
The content of the polymer (C) in the pigment dispersion composition is preferably from 1 to 300% by weight, more preferably from 2 to 200% by weight and still more preferably from 5 to 100% by weight on the basis of the weight of the pigment (A) from the viewpoints of a good viscosity and good film properties of the resulting composition.

The method for producing the pigment dispersion composition of the present invention is not particularly limited. However, there is preferably used such a method in which the polymer (C) and the non-aqueous solvent (B) are previously dispersed together, and then the resulting preliminary dispersion is mixed with the pigment (A) in the form of particles having a larger particle size, and further the obtained mixture is subjected to substantial dispersing treatment to obtain the aimed composition.
The dispersing device used in the preliminary dispersing treatment is not particularly limited, and any suitable known dispersing devices may be used therefor. Among them, a paint shaker, a beads mill and a high-pressure dispersing device are preferably used from the viewpoint of finely pulverizing the pigment (A).
In the substantial dispersing treatment for more finely pulverizing the particles dispersed in the resulting preliminary dispersion, a media-type dispersing device is preferably used. As the material of the media used in the media-type dispersing device, there may be mentioned ceramic materials such as zirconia and titania, polymer materials, metals, etc. Among these materials, from the viewpoint of a good abrasion property, zirconia is preferably used. The particle size of the media used in the media-type dispersing device is preferably from 0.003 to 0.1 mm, more preferably from 0.005 to 0.09 and still more preferably from 0.01 to 0.08 mm.
As the preferred media-type dispersing device used in the substantial dispersing treatment, there may be mentioned a paint shaker, a beads mill, etc. Examples of the commercially available media-type dispersing device include "ULTRA APEX MILL" (tradename) available from Kotobuki Industries Co., Ltd., and "PICO MILL" (tradename) available from Asada Iron Works Co., Ltd.

The pigment dispersion composition of the present invention may also contain, in addition to the above pigment (A), non-aqueous solvent (B) and polymer (C), a binder, a polyfunctional monomer (curing component), a photopolymerization initiator, etc.
Examples of the binder include copolymers of (meth)acrylic acid and a (meth)acrylic acid ester (such as, e.g., (meth) acrylic acid/benzyl methacrylate copolymers), styrene/maleic anhydride copolymers, and reaction products of styrene/ maleic anhydride copolymers and alcohols. The weight-average molecular weight of the binder is preferably from 5,000 to 200,000. The content of the binder in the pigment dispersion composition is preferably from 20 to 80% by weight on the basis of a total weight of the whole solid components contained in the composition.
Examples of the polyfunctional monomer include (meth)acrylic acid esters having two or more ethylenically unsaturated double bonds (such as, e.g., dipentaerythritol hexaacrylate), urethane (meth)acrylate, (meth)acrylamide, allyl compounds and vinyl esters. The content of the polyfunctional monomer in the pigment dispersion composition is preferably from 10 to 60% by weight on the basis of a total weight of the whole solid components contained in the composition.
Examples of the photopolymerization initiator include aromatic ketones, lophine dimer, benzoins, benzoin ethers and polyhalogens. In particular, combination of 4,4'-bis(diethylamino)benzophenone and a dimer of 2-(o-cblorophenyl)-4,5-diphenyl imidazole, and 4-[p-N,N-di(ethoxycarbonylmethyl)-2,6-di(trichloromethyl)-s-triazine] are preferably used. The photopolymerization initiators may be used alone or in combination of any two or more thereof. The content of the photopolymerization initiator in the pigment dispersion composition is preferably from 0.2 to 10% by weight on the basis of a total weight of the whole solid components contained in the composition.

## EXAMPLES

In the following production examples, examples and comparative examples, the term "%" indicates "% by weight" unless otherwise specified.
Meanwhile, the molecular weight, non-volatile content, epoxy value and adsorption rate of the respective polymers obtained in the Production Examples were respectively measured by the following methods.

### (1) Measurement of Number-Average Molecular Weight (Mn) and Weight-Average Molecular Weight (Mw) of Polymer

The number-average molecular weight and the weight-average molecular weight of the polymer were respectively measured by GPC method using two columns "K-804L" connected in series which were available from Showa Denko K.K., and using chloroform containing 1 mmol/L of Farmin DM as a solvent and a polystyrene as a standard substance.

### (2) Measurement of Non-Volatile Content

A glass bar and 10 g of dried anhydrous sodium sulfate were weighed and placed in a Petri dish, and further

2 g of a polymer solution was poured therein. The contents of the Petri dish were mixed by the glass bar and then dried using a pressure reducing dryer (pressure: 8 kPa) at 105°C for 2 h. The weight of the obtained dried product was measured to determine a non-volatile content therein according to the following formula.

Non-volatile content = {[weight of sample - (weight of dried product - (total weight of Petri dish, glass bar and anhydrous sodium sulfate))]/weight of sample} x 100

(3) Measurement of Epoxy Value

Hydrochloric acid was added to a polymer solution to subject the polymer to chlorohydrination. The epoxy value of the polymer was determined by expressing an amount of hydrochloric acid consumed in the chlorohydrination in terms of an amount (mg) of potassium hydroxide.

(4) Measurement of Adsorption Rate

The pigment dispersion composition prepared was subjected to centrifugal separation using a centrifugal separator "himac CP56G" (tradename) available from Hitachi Koki Co., Ltd., at 30,000 rpm for 3 h. A solid content of the composition before subjected to centrifugal separation and a solid content of the resulting supernatant solution were calculated according to the formula described in the above item (2): "measurement of non-volatile content". The rate of adsorption of the polymer to a surface of the pigment was calculated according to the following formula. Meanwhile, in the following formula, the "solid content of materials charged" means a total content of the pigment and polymer used.
Adsorption rate (%) = {(solid content of supernatant solution)/[(solid content of composition before centrifugal separation) x (amount of polymer charged)/(solid content of materials charged)]} x 100

PRODUCTION EXAMPLE 1-1: [Synthesis of poly(glycidyl methacrylate-2-hydroxyethyl methacrylate-N-vinyl pyrrolidone) (component c1)]

A separable flask equipped with a reflux condenser, a thermometer, a nitrogen inlet tube and a stirrer was charged with 38.9 g of N-vinyl-2-pyrrolidone (hereinafter referred to merely as "VP"), 4.0 g of glycidyl methacrylate (hereinafter referred to merely as "GMA"), 11.3 g of 2-hydroxyethyl methacrylate (hereinafter referred to merely as "HEMA"), 0.4 g of Mercaptoethanol as a chain transfer agent and 75.7 g of ethanol, and an inside of the flask was purged with nitrogen. While stirring the contents of the flask at 77°C, a solution prepared by dissolving 1.5 g of 2,2'-azobis(2,4-dimethyl valeronitrile) (available from Wako Pure Chemical Industries, Ltd.; azo-based polymerization initiator; tradename: "V-65") in 9.8 g of ethanol was added thereto.
Next, while stirring the thus obtained monomer solution at 77°C, a solution prepared by mixing 58.4 g of VP, 19.8 g of GMA, 56.6 g of HEMA, 1.0 g of mercaptoethanol, 2.5 g of the above polymerization initiator and 173.2 g of ethanol with each other was added dropwise thereto over 90 min.
After completion of the dropping, a solution prepared by mixing 15.8 g of GMA, 45.3 g of HEMA, 0.5 g of mercaptoethanol, 1.0 g of the above polymerization initiator and 65 g of ethanol with each other was further added dropwise to the resulting solution over 3 h. After further stirring the resulting solution at 77°C for 1 h, 0.3 g of the above polymerization initiator and 7.5 g of ethanol were added to the resulting solution. After further stirring the resulting solution at 77°C for 1 h, 0.3 g of the above polymerization initiator and 7.5 g of ethanol were added to the resulting solution. After further stirring the resulting solution for 1 h, the obtained reaction solution was cooled to obtain an ethanol solution of poly(GMA-HEMA-VP) (component (c1)).
As a result, it was confirmed that the resulting component (c1) had a number-average molecular weight of 5,800, a weight-average molecular weight of 12,400, a non-volatile content of 50% and an epoxy value of 28 mg KOH/g.

PRODUCTION EXAMPLES 1-2 TO 1-5

The same procedure as in Production Example 1-1 was repeated except for varying the conditions as shown in Table 1, thereby obtaining polymer solutions. The results are shown in Table 1.

TABLE 1

| | Production Examples | | | | |
|---|---|---|---|---|---|
| | 1-1 | 1-2 | 1-3 | 1-4 | 1-5 |
| Monomer solution to be initially charged (g) | | | | | |
| N-vinyl-2-pyrrolidone (VP) | 38.9 | 36.4 | 38.9 | 38.9 | 46.7 |
| Glycidyl methacylate (GMA) | 4,0 | 5.2 | 9.6 | 15.3 | 7.1 |
| 2-hydroxyethyl methacrylate (HEMA) | 11.3 | 10.7 | 5.7 | 0 | 11.2 |
| Mercaptoethanol | 0.4 | 0.9 | | 0,4 1.2 | 1.4 |
| Ethanol | 75.7 | 75.7 | 75.7 | - | 90.9 |
| MEK/IPA (1/1)*1 | - | - | - | 82.5 | - |
| 2,2'-azobis(2,4-dimethylvaleronitrile) | 1.5 | 1.5 | 1.5 | 1.5 | 1.8 |
| Ethanol | 9.8 | 9.8 | 9.8 | 9.8 | 11,7 |
| Monomer solution 1 to be dropped (g) | | | | | |
| N-vinyl-2-pyrrolidone (VP) | 58.4 | 54.6 | 58.4 | 58.4 | 70.0 |
| Glycidyl methacrylate (GMA) | 19.8 | 26.0 | 57.7 | 76.4 | 35.6 |
| 2-hydroxyethyl methacrylate (HEMA) | 56.6 | 53.5 | 28.3 | 0 | 56.1 |
| Mercaptoethanol | 1.0 | 2,0 | 2.0 | 2.7 | 3.2 |
| 2,2'-azobis(2,4-dimethylvaleronitrile) | 2.5 | 2.5 | 2.5 | 3.8 | 3.0 |
| Ethanol | 173.2 | 173 | 173 | - | 207 |
| MEK/IPA(1/1)*1 | - | - | - | 206.3 | - |
| Monomer solution 2 to be dropped (g) | | | | | |
| Glycidyl methacrylate (GMA) | 15.8 | 20.8 | 38.5 | 61.1 | 28.4 |
| 2-hydroxyethylmethactylate | 45.3 | 42.8 | 22.7 | 0 | 44.9 |
| (HEMA) | | | | | |
| Mercaptoethanol | 0.5 | 0.9 | 0.45 | 1.2 | 1.4 |
| 2,2'-azobis(2,4-dimethylvaleronitrile) | 1.0 | 1.0 | 1.0 | 1.5 | 1.2 |
| Ethanol | 65 | 65 | 65 | - | 78 |
| MEK/IPA (1/1)*1 | - | - | - | 82.5 | - |
| Monomer solution 3 to be dropped (g) | | | | | |
| 2,2'-azobis(2,4-dimethylvaleronitrile) | 0.3 | - | - | - | 0.3 |
| Ethanol | 7.5 | - | - | - | 9.0 |

(continued)

| | | | | | |
|---|---|---|---|---|---|
| Monomer solution 4 to be dropped (g) | | | | | |
| | 0.3 | - | - | - | 0.3 |
| 2,2'-azobis(2,4-dimethylvaleronitrile) Ethanol | 7.5 | - | - | - | 9 |
| Properties of obtained polymer | | | | | |
| Nuniber-average molecular weight | 5800 | 4400 | 7500 | 2800 | 3600 |
| Weight-average molecular weight | 12400 | 10800 | 22100 | 6500 | 8900 |
| Non-volatile content (%) | 50 | 46 | 36 | 43 | 44 |
| Epoxy value (mg KOH/g) | 28 | 34 | 49 | 96 | 41 |
| Note *1: Mixed solution of methyl ethyl ketone and 2-propanol (=1/1; weight ratio) | | | | | |

PRODUCTION EXAMPLE 2-1: [Synthesis of one-end carboxylic acid-terminated type poly(methyl methacrylate) (component (c2))]

A separable flask equipped with a reflux condenser, a thermometer, a nitrogen gas inlet tube and a stirrer was charged with 200 g of methyl methacrylate, 14.2 g of 3-mercaptopropyanic acid (as a chain transfer agent) and 25 g of Propylene glycol monomethyl ether acetate (hereinafter referred to merely as "PGMEA"), and an inside of the flask was purged with nitrogen, Then, while stirring the contents of the flask at 80˚C, 800 g of methyl methacrylate, 56.9 g of 3-mercaptopropionic acid, 400 g of PGMEA, and 8 g of 2,2'-azobis(2,4-dimethyl valeronitrile) (as a polymerization initiator) were added dropwise thereto over 3 h, and after further stirring the resulting mixture at 80˚C for 1 h, 8 g of the above polymerization initiator, 3.6 g of 3-mercaptopropionic acid and 400 g of PGMEA were added thereto. The resulting mixture was further stirred at 80˚C for 2 h, thereby obtaining a carboxylic acid-terminated type poly(methyl methacrylate) solution.
As a result, it was confirmed that the resulting polymer solution had an acid value of 21 mg KOH/g, and the obtained polymer had a number-average molecular weight of 1,700, a weight-average molecular weight of 3,000 and a non-volatile content of 38%.

PRODUCTION EXAMPLE 2-2

The same procedure as in Production Example 2-1 was repeated except that the amount of 3-mercaptopropionic acid initially charged was changed to 25.6 g, and the amount of 3-mercaptopropionic acid in the dropping monomer solution was changed to 102.2 g, thereby obtaining the aimed polymer solution.
As a result, it was confirmed that the resulting polymer solution had an acid value of 33 mg KOH/g, and the obtained polymer had a number-average molecular weight of 1,000, a weight-average molecular weight of 1,700 and a non-volatile content of 44%.

PRODUCTION EXAMPLE 2-3: [Synthesis of one-end carboxylic acid-terminated type poly(methyl methacrylate) (component (c2))]

A separable flask equipped with a reflux condenser, a thermometer, a nitrogen gas inlet tube and a stirrer was charged with 700 g of methyl methacrylate, 49.77 g of 3-mercaptopropionic acid and 350 g or diethylene glycol monobutyl ether acetate (hereinafter referred to merely as "BCA"), and an inside of the flask was purged with nitrogen. Then, while stirring the contents of the flask at 75˚C, 2,800 g of methyl methacrylate, 199.1 g of 3-mercaptopropionic acid, 1,400 g of BCA and 28 g of 2,2'-azobis(2,4-dimethyl valeronitrile) were added dropwise thereto over 3 h, and further 28 g of the above polymerization initiator, 12.6 g of 3-mercaptopropionic acid and 1,400 g of BCA were added dropwise thereto over 1 h. The resulting mixture was further stirred at 75˚C for 2 h, thereby obtaining a carboxylic acid-terminated type poly(methyl methacrylate) solution.
As a result, it was confirmed that the resulting polymer solution had an acid value of 19.72 mg KOH/g, and the obtained polymer had a number-average molecular weight of 1,700, a weight-average molecular weight of 3,000 and a non-volatile content of 53%.

PRODUCTION EXAMPLE 3-1: [Production of Polymer (C) by Coupling Reaction between Epoxy Group and Carboxylic Acid]

A separable flask equipped with a reflux condenser, a thermometer and a stirrer was charged with 60 g of the polymer solution obtained in Production Example 1-1, 86 g of the polymer solution obtained in Production Example 2-1, 66 g of PGMEA, 66 g of ethanol and 3 g of tetrabutyl ammonium bromide (TBAB) (as a catalyst), and the contents of the flask were stirred at 90˚C for 15 h. The resulting mixture was cooled and then heated using an evaporator (bath temperature: 63˚C; pressure: 92 kPa) to distil off ethanol therefrom, thereby obtaining a poly(HEMA-VP-MMA) solution. As a result, it was confirmed that the polymer solution before distilling off ethanol therefrom had an acid value of 1.8 mg KOH/g (reaction rate: 84%),
Also, it was confirmed that the resulting polymer had a number-average molecular weight of 5,000, a weight-average molecular weight of 33,000 and a non-volatile content of 40%. The results are shown together with the polymer composition determined by calculation in Table 2.

PRODUCTION EXAMPLES 3-2 TO 3-5: [Production of Polymer (C) by Coupling Reaction between Epoxy Group and Carboxylic Acid]

The same procedure as in Production Example 3-1 was repeated except for changing the conditions as shown in Table 2, thereby obtaining polymers. The results are shown in Table 2.
TABLE 2

| | Production Examples | | | | |
|---|---|---|---|---|---|
| | 3-1 | 3-2 | 3-3 | 3-4 | 3-5 |
| Amount charged g) | | | | | |
| Polymer solution of Production Example 1-1 | 60 | - | - | - | - |
| Polymer solution of Production Example 1-2 | - | 64 | - | - | - |
| Polymer solution of Production Example 1-3 | - | - | 83 | - | - |
| Polymer solution of Production Example 1-4 | - | - | - | 70 | - |
| Polymer solution of Production Example 1-5 | - | - | - | - | 247 |
| Polymer solution of Production Example 2-1 | 86 | 95 | - | 95 | - |
| Polymer solution of Production Example 2-2 | - | - | 74 | - | - |
| Polymer solution of Production Example 2-3 | - | - | - | - | 366 |
| PGMEA*1 | 66 | 33 | 4 | 0 | - |
| BCA*2 | - | - | - | - | 160 |
| Tetrabutyl ammonium bromide | 3 | 3 | 3 | 0.3 | 10.4 |
| Ethanol | 66 | 33 | 4 | - | 160 |
| Methyl ethyl ketone | - | - | - | 59 | - |
| Reaction conditions | | | | | |
| Reaction temperature (˚0) | 90 | 90 | 90 | 85 | 90 |
| Reaction time (h) | 15 | 14 | 6 | 8 | 9 |
| Reaction rate (%) | 84 | 87 | >99 | >99 | 93 |
| Polymer composition*3 (wt%) | | | | | |
| N-vinyl-2-pyrrolidone | 16 | 14 | 17 | 14 | 14 |
| Glycidyl methacrylate | 1 | 2 | 8 | 16 | 3 |

(continued)

| | | | | | |
|---|---|---|---|---|---|
| Polymer composition*3 (wt%) | | | | | |
| 2-Hydroxyethyl methacrylate | 19 | 17 | 10 | 0 | 14 |
| PMMA | 63 | 67 | 65 | 70 | 69 |
| Acid value of polymer solution (mg KOH/g) | 1.8 | 1.1 | 0.2 | 0.1 | 0.5 |
| Ratio of COOH group to epoxy group (COOH/epoxy group) | 1.0/1 | 0.8/1 | 0.5/1 | 0,3/1 | 0.7/1 |
| Properties of obtained polymer | | | | | |
| Number-average molecular weight | 5000 | 6200 | 6500 | 6600 | 6300 |
| Weight-average molecular weight | 33000 | 37000 | 60100 | 19800 | 28000 |
| Non-volatile content (%) | 40 | 40 | 40 | 40 | 40 |
| Note *1: Propylene glycol monomethyl ether acetate<br>*2: Diethylene glycol monobutyl ether acetate<br>*3: Calculated from composition charged and reaction rate | | | | | |

COMPARATIVE PRODUCTION EXAMPLE 1: [Synthesis of one-end methacryloyl-terminated type poly(methyl methacrylate)]

A four-necked flask equipped with a reflux condenser, a thermometer, an air inlet tube and a stirrer was charged with 450 g of a carboxylic acid-terminated type poly(methyl methacrylate) solution obtained in the same manner as in Production Example 2-1, 18.4 g of glycidyl methacrylate (GMA), 6.2 g of tetrabutyl ammonium bromide (TBAB) (as a catalyst), 0.6 g of methoxyphenol and 10 g of PGMEA, and the contents of the flask were stirred at 90˚C for 12h while bubbling with air, thereby obtaining an one-end methacryloyl-terminated poly(methyl methacrylate).
As a result, it was confirmed that the resulting polymer solution had an acid value of 0.11 mg KOH/g, and the obtained polymer had a number-average molecular weight of 1,800, a weight-average molecular weight of 3,200 and a non-volatile content of 60%.

COMPARATIVE PRODUCTION EXAMPLE 2-1: [Production of poly(HEMA-VP-MMA) by Macromonomer Method]

A separable flask equipped with a reflux condenser, a thermometer, a nitrogen gas inlet tube and a stirrer was charged with 10 g of PGMEA, and an inside of the flask was purged with nitrogen. Then, while stirring at 78˚C, 12.7 g of VP, 120.9 g of the Macromonomer solution produced in Comparative Production Example 1, 14.8 g of HEMA, 41 g of PGMEA, 2 g of the above polymerization initiator and 0.4 g or Mercaptoethanol were added dropwise to the flask over 3 h. After completion of the dropping, 2 g of the above polymerisation initiator and 45 g of PGMEA were added to the flask, and the contents of the flask were stirred at 78˚C for 3 h and then further stirred at 90˚C for 30 min. The resulting reaction mixture was cooled to obtain a poly(HEMA-VP-MMA) solution.
As a result, it was confirmed that the obtained polymer had a number-average molecular weight of 7,200, a weight-average molecular weight of 31,000 and a non-volatile content of 40%.

COMPARATIVE PRODUCTION EXAMPLE 2-2: [Production of poly(HEMA-VP-MMA) by Macromonomer Method]

The same procedure as in Comparative Production Example 2-1 was repeated except for using a dropping monomer solution containing 10.7 g of VP, 130 g of the macromonomer solution produced in Comparative Production Example 1, 10.8 g of HEMA. 41 g of PGMEA, 2 g of the above polymerization initiator and 0.4 g of mercaptoethanol in place of the dropping solution used in Comparative Production Example 2-1, thereby obtaining a poly(HEMA-VP-MMA) solution.
As a result, it was confirmed that the obtained polymer had a number-average molecular weight of 9,400, a weight-average molecular weight of 41,000 and a non-volatile content of 40%.

EXAMPLE 1

Twenty grams of C.I. Pigment Red 254 ("Irgaphor Red BK-CF" (tradename) available from Ciba Specialty Chemicals Corp.), 50 g of the polymer solution produced in Production Example 3-1 (20 g in terms of a weight of the

polymer) and 128.6 g of propylene glycol monomethyl ether acetate were weighed and added together with 400 g of 0.3 mmϕ zirconia beads into a 500 cc polymer bottle, The contents of the polymer bottle were shaken by a paint shaker (available from Asada Iron Works, Co., Ltd.) for 3 h and then filtered through a wire mesh to remove the zirconia beads therefrom, thereby obtaining a preliminary dispersion. Further, 100 g of the resulting preliminary dispersion were weighed and added together with 100 g of 0.05 mmϕ zirconia beads into a 250 cc polymer bottle, and then shaken therein for 18 h. The resulting mixture was filtered through a wire mesh to obtain a pigment dispersion composition.

EXAMPLES 2 TO 5 AND COMPARATIVE EXAMPLES 1 AND 2

The same procedure as in Example 1 was repeated except for varying the conditions as shown in Table 2, thereby obtaining pigment dispersion compositions.
The respective pigment dispersion compositions obtained in Examples 1 to 5 and Comparative Examples 1 and 2 were evaluated by the above-mentioned methods. The results are shown in Table 3.
TABLE 3

| | Examples | | | | | Com. Ex. | |
|---|---|---|---|---|---|---|---|
| | 1 | 2 | 3 | 4 | 5 | 1 | 2 |
| Production Examples of polymers | Pro. Ex. 3-1 | Pro. Ex. 3-2 | Pro. Ex. 3-3 | Pro. Ex. 3-4 | Pro. Ex. 3-5 | Com. Pro. Ex, 2-1 | Com. Pro. Ex, 2-2 |
| Pigment (A)*1 | PR 254 | PR 254 | PR 254 | PR 254 | PR 254 | PR 254 | PR 254 |
| Non-aqueous solvent (B) *2 | FGMEA | PGMEA | PGMEA | PGMEA | BCA | PGMEA | PGMEA |
| Absorption rate (%) | 47 | 52 | 55 | 39 | 60 | 29 | 29 |

Note *1: PR 254: C.I. Pigment Red 254 (tradename: "Irgaphor Red BK-CF")
*2: PGMEA: Propylene glycol monomethyl ether acetate
BCA: Diethylene glycol monobutyl ether acetate

From Table 3, it was recognized that the non-aqueous pigment dispersion composition according to the present invention was excellent in adsorption of the polymer to the pigment.

INDUSTRIAL APPLICABILITY

In accordance with the present invention, there are provided a non-aqueous pigment dispersion composition in which a polymer is strongly adsorbed to a pigment, and a process for producing the polymer for non-aqueous pigment dispersion in an efficient manner.
The non-aqueous pigment dispersion composition of the present invention is excellent in adsorption of the polymer to the pigment and also excellent in adhesion to various substrates (suck as a black matrix for color filters, and a glass substrate) as well as film properties, and can be therefore suitably employed as a coloring material for color filters used in liquid crystal displays, solid-state image sensors, etc.

## Claims

1. A non-aqueous pigment dispersion composition comprising (A) a pigment, (B) a non-aqueous solvent and (C) a polymer obtained by reacting the following components (c1) and (c2) with each other,
Component (c1): a copolymer containing a constitutional unit derived from (c1a) a vinyl monomer containing a reactive functional group and a constitutional unit derived from (c1b) a vinyl monomer containing a nitrogen atom; and

Component (c2): a poly(alkyl (meth)acrylate) and/or a polystyrene containing a functional group capable of reacting with the reactive functional group in the component (c1) at one terminal end thereof.

**2.** The non-aqueous pigment dispersion composition according to claim 1, wherein the reactive functional group in the component (c1) is an epoxy group or an isocyanate group, and the functional group in the component (c2) which is capable of reacting with the epoxy group is a hydroxyl group, a carboxyl group or an amino group.

**3.** The non-aqueous pigment dispersion composition according to claim 1 or 2, wherein a content of a constitutional unit derived from the component (c2) in whole constitutional units of the polymer (C) is from 30 to 95% by weight.

**4.** The non-aqueous pigment dispersion composition according to any one of claims 1 to 3, wherein the component (c2) has a number-average molecular weight of from 500 to 20,000.

**5.** The non-aqueous pigment dispersion composition according to any one of claims 1 to 4, wherein the vinyl monomer (c1a) containing the reactive functional group is a (meth)acrylic acid ester containing a glycidyl group.

**6.** The non-aqueous pigment dispersion composition according to any one of claims 1 to 5, wherein the vinyl monomer (c1b) containing a nitrogen atom is N-vinyl pyrrolidone.

**7.** The non-aqueous pigment dispersion composition according to any one of claims 1 to 6, wherein the polymer (C) further contains a constitutional unit derived from (c3) a vinyl monomer containing an alcoholic hydroxyl group.

**8.** The non-aqueous pigment dispersion composition according to claim 7, wherein the vinyl monomer (c3) containing an alcoholic hydroxyl group is 2-hydroxyethyl (meth)acrylate.

**9.** The non-aqueous pigment dispersion composition according to any one of claims 1 to 8, wherein the non-aqueous solvent (B) is propylene glycol monomethyl ether acetate and/or diethylene glycol monobutyl ether acetate.

**10.** The non-aqueous pigment dispersion composition according to any one of claims 1 to 9, wherein the pigment (A) is a diketopyrrolopyrrole -based pigment.

**11.** A process for producing a polymer for non-aqueous pigment dispersion, comprising the following steps (I) and (II);

Step (I): reacting (c1b) a vinyl monomer containing a nitrogen atom with (c1a) a vinyl monomer containing a reactive functional group to produce a copolymer containing a constitutional unit derived from the vinyl monomer (c1a) and a constitutional unit derived from the vinyl monomer (c1b); and

Step (II): reacting the copolymer produced in the above step (I) with (c2) a poly(alkyl (meth)acrylate) and/or a polystyrene containing a functional group capable of reacting with the reactive functional group in the copolymer at one terminal end thereof to produce a graft copolymer formed by grafting the component (c2) to the copolymer.

## INTERNATIONAL SEARCH REPORT

International application No.
PCT/JP2008/069195

A. CLASSIFICATION OF SUBJECT MATTER
*C08L51/00*(2006.01)i, *C08K5/3417*(2006.01)i, *G02B5/20*(2006.01)n

According to International Patent Classification (IPC) or to both national classification and IPC

B. FIELDS SEARCHED

Minimum documentation searched (classification system followed by classification symbols)
C08L25/00, C08L33/00, C08L51/00-55/00, C08K5/3417, G02B5/20, C09B67/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2000-234007 A (Fuji Photo Film Co., Ltd.), 29 August, 2000 (29.08.00), Claims 1, 10; Par. Nos. [0047], [0058], [0086], [0087], [0103] to [0105] (Family: none) | 1-11 |
| A | JP 2002-341533 A (Showa Denko Kabushiki Kaisha), 27 November, 2002 (27.11.02), Claims & US 2004-0157140 A1 & EP 001388025 A | 1-11 |
| A | JP 2007-211077 A (Kao Corp.), 23 August, 2007 (23.08.07), Claims (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 January, 2009 (08.01.09) | 20 January, 2009 (20.01.09) |
| Name and mailing address of the ISA/ Japanese Patent Office | Authorized officer |
| Facsimile No. | Telephone No. |

Form PCT/ISA/210 (second sheet) (April 2007)

INTERNATIONAL SEARCH REPORT

International application No.
PCT/JP2008/069195

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-087537 A (Ajinomoto Co., Inc.), 31 March, 1997 (31.03.97), Claims (Family: none) | 1-11 |
| P,A | JP 2007-314771 A (Kao Corp.), 06 December, 2007 (06.12.07), Claims (Family: none) | 1-11 |
| P,A | JP 2008-179750 A (Kao Corp.), 07 August, 2008 (07.08.08), Claims (Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7140654 A
- JP 10339949 A
- JP 2003517063 A